# EUROPEAN PATENT SPECIFICATION

(11) **EP 1 560 635 B1**
(45) Date of publication and mention of the grant of the patent: **23.08.2006**
(21) Application number: 03781785.5
(22) Date of filing: 05.11.2003
(51) Int. Cl.: B01D 27/10, B01D 35/14

(54) **FILTER CARTRIDGE HAVING COMPONENT FOR USE WITH A SENSOR SYSTEM**
FILTERKARTUSCHE ZUM BETRIEB MIT EINEM SENSORSYSTEM
CARTOUCHE FILTRANTE PRESENTANT UN COMPOSANT DESTINE A ETRE UTILISE AVEC UN SYSTEME DE DETECTION

(30) Priority: 06.11.2002 US 424487 P
(43) Date of publication of application: 10.08.2005
(73) Proprietor: DONALDSON COMPANY, INC., Minneapolis, MN 55440-1299 (US)
(72) Inventor: HACKER, John R., Edina, MN 55424 (US)
(74) Representative: Eisenführ, Speiser & Partner
(86) International application number: PCT/US2003/035394
(87) International publication number: WO 2004/043570

(56) References cited:
- WO-A-01/30483
- WO-A-94/20784
- WO-A-94/22551
- US-A- 4 721 563
- US-A- 5 378 254
- US-A- 6 051 144

## Description

### Field of the Disclosure

The present disdosure concerns fluid filter assemblies. It particularly concerns the use, in a cartridge-style filter assembly, of a filter cartridge that includes a component therein for use with a communication/sensor arrangement. The disclosure also concerns assemblies including the cartridge.

### Background

Fluid filter assemblies are needed in a wide variety of types of equipment. For example, liquid filter assemblies are used to filter lubricating fluid, hydraulic fluid and/or fuel; and, air filter assemblies are used to filter engine intake air. In general, for such fluid filter assemblies, during operation the fluid (liquid or air) to be filtered is passed through a filter media. Periodically, the filter media becomes occluded and needs to be replaced.

Two general types of liquid filter assemblies are well known. These are: (1) spin-on assemblies; and, (2) cartridge-style assemblies. For a typical spin-on assembly, generally the filter media is permanently contained within a housing, for example a metal housing, and the housing is configured to be selectively spun onto, and off of, a filter head. When the filter media has reached its operational lifetime, or service interval, generally the entire spin-on unit, housing and all, is removed from the filter head and is replaced. Examples of such assemblies are described in U.S. patents 4,369,113; 4,834,885; 4,743,374; and, 5,104,537. Spin-on assemblies have been used, for example, for lubricating fluid filters, hydraulic fluid filters and fuel filters.

The second category of filters, i.e., cartridge-style filters, is generally characterized by having the filter media in the form of a removable and replaceable (i.e., serviceable) cartridge, contained within a housing, for example a plastic or metal housing, that is not replaced during servicing. During servicing, when the filter media is replaced, generally: (a) the housing is opened; (b) the filter cartridge is removed from the housing; (c) a replacement filter cartridge is placed in the housing; and, (d) then the housing is closed. Again, a characteristic of cartridge-style systems is that some of the componentry, for example the outer housing, is not normally replaced with each servicing. Cartridge style assemblies have been widely utilized in air filters, with some application in liquid filters. Examples of cartridge-style liquid filters are described in U.S. patent application publication US-A1- 2002/0125188. Another example of a cartridge-style liquid filtration system is disclosed in US-A-6,051,144 proposing to provide a filter cartridge and the base of the filtration system with means capable of communicating the presence or absence of a filter cartridge. Said means may take the form of a base mounted optical transmitter/receiver and an optical reflector provided somewhere on the filter cartridge.

The spin-on style filter has many advantages. For example, all of the internal componentry and seals are permanently in place, and the service provider does not need to be concerned with creating the appropriate internal assembly, during servicing. All the service provider needs to do is install a new spin-on filter onto a filter head, from which the previous filter was removed.

There are, however, disadvantages associated with spin-on style assemblies, that are leading to an increase in popularity of cartridge-style systems. These generally relate to cost and disposal issues. Specifically, use of a cartridge-style assembly means that less componentry needs to be disposed of, after a servicing operation. This is, again, because much of the componentry is reused and only the serviceable filter cartridge is typically replaced.

Improvements in cartridge-style assemblies are desired, as such assemblies become more and more popular due to material costs, material disposal and similar issues. Herein, improvements relating to providing a component of a communication/sensor arrangement in a filter cartridge for a cartridge-style assembly are provided.

### Summary of the Invention

According to the present disclosure a fluid (liquid or air unless specified) filter cartridge is provided, usable in a fluid filter assembly. The filter cartridge includes a communication/sensor circuit completion unit therein. The communication/sensor circuit completion unit is generally configured to complete a selected communication/signal circuit only when the filter cartridge is properly mounted on a filter head, for use.

The communication/sensor circuit completion unit is preferably configured for transmission of a light signal. A variety of options are presented, including one in which the communication/sensor circuit completion unit is a reflector or reflector plug positioned in the cartridge. In another option, the communication/sensor circuit completion unit includes an optic transmitter and optic receiver, oriented to pass a light beam through or across an optional gap, the gap preferably comprising a portion of a flow path for liquid exiting the cartridge.

Also presented is a cartridge-style filter assembly which includes the serviceable filter cartridge positioned in a housing. In addition, fluid filter arrangements are provided in which the cartridge-style filter assembly is operably mounted on a filter head.

Methods are provided which generally relate to utilizing a signal passed through a serviceable filter cartridge, to indicate that the filter cartridge is properly positioned for operation of the fluid filter assembly. One method described, utilizes a light signal, to accomplish this. In another method, a light signal is used to evaluate the nature of filtered liquid within the filter cartridge.

The techniques described herein can be applied in both air and liquid (i.e., fluid) filter assemblies. The specific examples shown, describe use with liquid filter assemblies. However, application in an air filter assembly would involve analogous positioning of componentry.

### Brief Description of the Drawings

Fig. 1 is a schematic, cross-sectional view of a cartridge-style fluid filter assembly according to the present disclosure.
Fig. 2 is a schematic, side, cross-sectional view of a filter element component usable in the assembly of Fig. 1.
Fig. 3 is a schematic, enlarged, fragmentary view of a portion of the element depicted in Fig. 2.
Fig. 4 is a schematic, enlarged, fragmentary view of a portion of the assembly depicted in Fig. 1.
Fig. 5 is a schematic, enlarged, fragmentary view of a portion of the assembly depicted in Fig. 1.
Fig. 6 is a schematic, enlarged, fragmentary view of a portion of Fig. 4, with arrows indicating a communication/signal path.
Fig. 7 is a schematic, cross-sectional view of the arrangement depicted in Fig. 1, shown during a step of bowl removal and cartridge separation from a filter head.
Fig. 8 is a schematic, enlarged, fragmentary view of a portion of an alternate embodiment of a filter head, usable with the filter element of Figs. 2 and 3.
Fig. 9 is a schematic, enlarged, fragmentary cross-sectional view of a portion of Fig. 8.
Fig. 10 is a perspective view of an alternate embodiment of a filter cartridge according to principles described herein.
Fig. 11 is a perspective view of an end cap component of the filter element of Fig. 10.
Fig. 12 is an enlarged, side cross-sectional view of the end cap of Fig. 11, taken along line 12-12 thereof.
Fig. 13 is an enlarged, schematic view of a portion of Fig. 12.
Fig. 14 is the schematic, cross-sectional view of an embodiment of the present disclosure including the element of Figs. 10-13.
Fig. 15 is an enlarged, fragmentary, schematic view of a portion of Fig. 14.
Fig. 16 is a cross-sectional view taken along line 16-16, Fig. 14.
Fig. 17 is an enlarged, fragmentary view of a portion of Fig. 16.
Fig. 18 is a perspective view of a reflector component used in the embodiment of Figs. 1-7.
Fig. 19 is a perspective view of an alternate embodiment of a reflector component, usable in filter cartridges according to the present disclosure.
Fig. 20 is a side elevational view of the reflector component depicted in Fig. 19.
Fig. 21 is a schematic view of a selected reflector cross section.
Fig. 22 is a side, cross-sectional, largely schematic view of a further alternate embodiment according to the present disclosure.
Fig. 23 is a fragmentary, schematic, top perspective view of a filter cartridge component of the assembly of Fig. 22.
Fig. 24 is a bottom perspective view of a filter head component of the assembly of Fig. 22.

### Detailed Description

### I. General Features of a Cartridge-Style Fluid Filter Assembly.

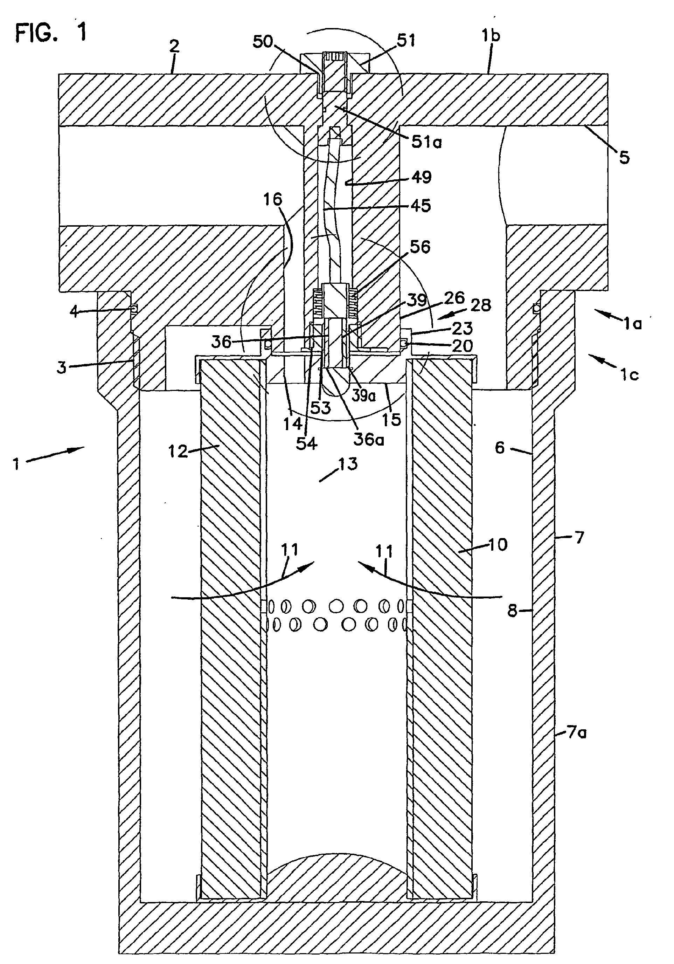

The reference number 1, Fig. 1, generally indicates a cartridge-style fluid filter assembly 1 according to the present disclosure. The cartridge-style filter assembly 1 depicted in Fig. 1 is shown in a schematic, cross-sectional view.

In Fig. 1, fluid filter assembly 1 is shown as a liquid filter assembly 1c and is shown operably mounted on a fluid flow outlet 1b comprising, in this instance, a filter head 2, for use to form a fluid (in this case liquid) filter arrangement 1a. The mounting occurs at threads 3, with sealing provided by o-ring 4. The term "operably mounted" in this context means that the filter assembly 1 is positioned on the filter head 2 (or outlet 1b) so that fluid flowing outwardly through the filter head 2 has been filtered, during operation of the equipment on which the cartridge-style filter assembly 1 and filter head 2 are mounted, in this instance as a liquid filter arrangement 1a. The equipment could be, for example, a vehicle or construction equipment.

A typical use would be as follows: liquid to be filtered is directed into filter head 2 through inlet 5. The liquid passes into assembly 1. In particular, the liquid passes into annular region 6, within housing, cover or bowl 7. Within interior 8 of the housing 7, the liquid then passes through filter cartridge 10 in the general direction of arrows 11. During this passage through cartridge 10, the liquid is filtered by passage through media 12. The liquid eventually passes into interior volume 13 defined by media 12 and which is surrounded by the filter cartridge 10. The liquid then passes outwardly through a passage 14 in open end 15 of the cartridge 10, and into exit channel 16 of the filter head 2. A plurality of passages 14 can be provided, to facilitate flow.

The filter cartridge 10 is a serviceable component. In this context the term "serviceable" is meant to refer to a filter cartridge 10 that can be removed and be replaced within assembly 1, during a normal servicing operation.

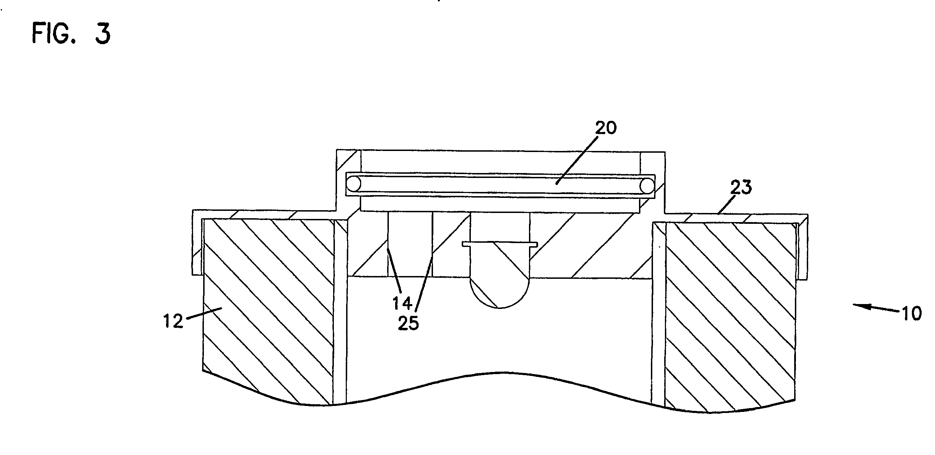

Service access to the serviceable filter cartridge 10, within housing 7, is generally provided by manufacturing the housing 7 to be selectively openable. One typical approach is to provide a housing 7 configured as a bowl 7a that is removeably mounted on the filter head 2. As described in detail below, this is the type of arrangement shown in Figs. 1-7. In other arrangements a service cover portion could be provided, that is removeably connected to a remainder of the housing 7. The housing 7 can be made from a variety of materials. In many applications as a liquid filter, housing 7 is a pressure vessel made from metal.

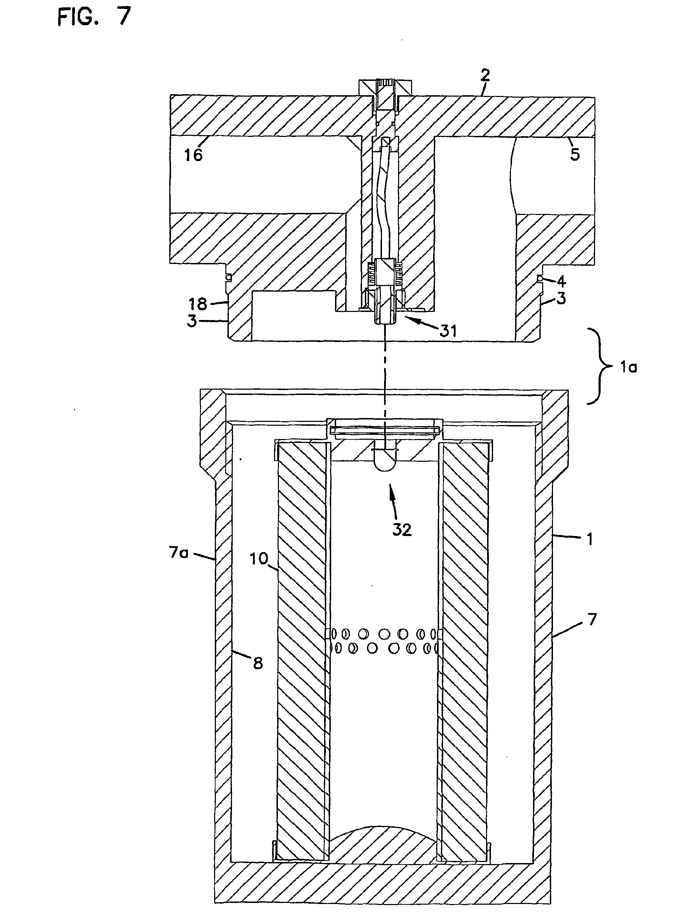

In Fig. 7, the cartridge-style assembly 1 is depicted removed from the filter head 2, with the disassembly occurring by unthreading the bowl 7a from threaded region 18 of the filter head 2. Once separation is complete, the cartridge-style assembly 1 can be serviced, i.e., the filter cartridge 10 can be removed and be replaced.

More specifically, a principal step during the servicing operation, is removal and replacement of the filter cartridge 10, from bowl interior 8. Typically, the filter cartridge 10 is constructed to be removed and to be discarded- For example, some filter cartridges 10 are constructed for incineration,

A typical servicing operation, then, involves replacement of filter cartridge 10 in the same housing 7, with a new or refurbished cartridge 10, and then remounting of the cartridge-style assembly 1 on to the filter head 2.

The particular cartridge-style assembly 1 depicted is a "bottom load" filter assembly. By this it is meant that generally the assembly 1 is positioned underneath the filter head 2, during installation and operation. Alternate liquid fluid filter assemblies are sometimes constructed as "top load" assemblies, in which the filter cartridge is positioned above the filter head, in use. Top load filter cartridges are described, for example, in U.S. 5,718,825 and 6,016,523.

It is noted that the techniques described herein can be applied in either top load or bottom load applications, and the bottom load application depicted is merely an example.

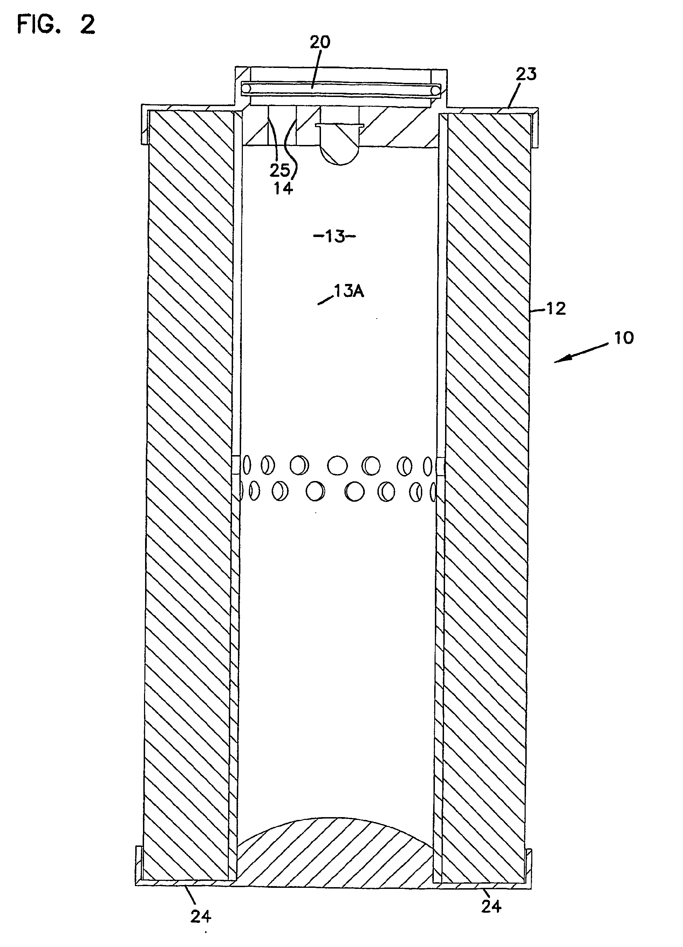

The cartridge 10 depicted is presented in a schematic form, in Fig. 2, for ease of understanding the principles of concern to the present disclosure. In general, the cartridge 10 includes media 12 positioned in extension between first and second opposite end caps 23, 24. The end caps 23, 24 can be metal end caps to which the media 12 is potted, or they can be molded end caps from a polymeric material. The principles described herein, can be applied in either type of application. For the particular embodiment shown, the end caps 23, 24 are molded end caps.

End cap 23, which is the end cap adjacent to filter head 2 in use, is generally an open end cap, meaning that there is included an aperture 25 extending through end cap 23, to allow escape of filtered liquid from center volume 13 of the filter cartridge 10. Aperture 25 may operate as the liquid exit or flow conduit 14, and a plurality of such apertures 25 can be included in cap 23 to facilitate operation.

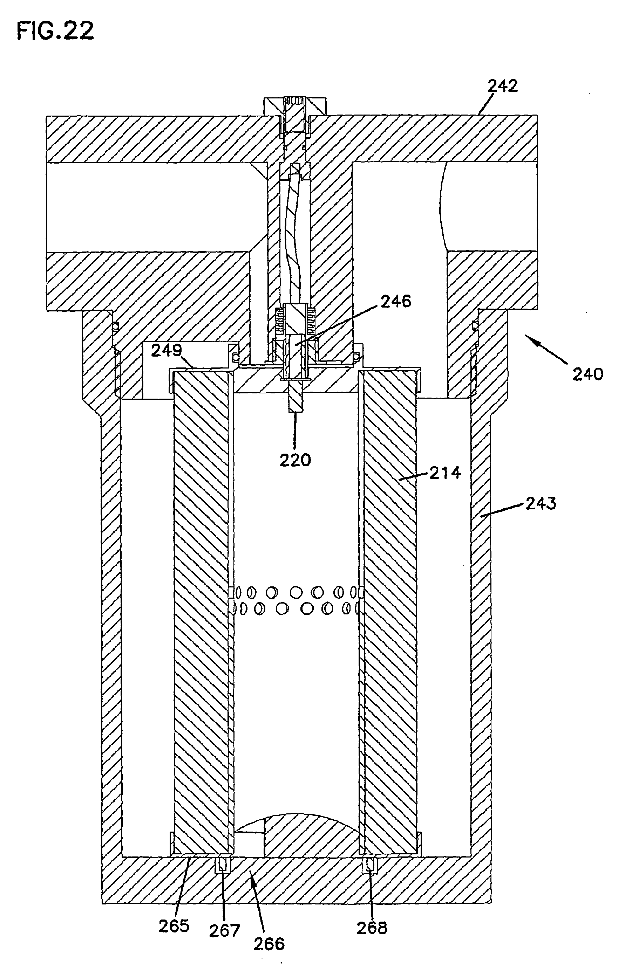

For the embodiment end cap 24, positioned at opposite end of the media 12, is a closed end cap, meaning it is closed to passage of liquid therethrough. In some instances a bypass valve can be positioned in end cap 24, to allow a bypass liquid flow should the filter media 12 become undesirably occluded. Such end caps will still be generally referred to herein as "closed end caps" since during normal intended use, they would preferably be closed by the bypass valve. End cap 24 could be positioned and configured as an open end cap, but an additional seal would be needed. An example of this is shown in Fig. 22.

Cartridge 10 is depicted schematically and may include a variety of features known or described for use with liquid filter cartridges and cartridge-style assemblies. Such features include, for example: a perforated or porous inner liner shown at 13a; a perforated or porous outer liner (not shown); features for engagement between the cartridge 10 and the cover, housing or bowl 7 (not shown); and, features to facilitate filtering of standing liquid, during removal of the cartridge 10 from the housing, cover or bowl 7 (not shown). These and other possible features are described, for example, in U.S. 6,322,097 B1; US Publ. 2002/0125188 A1; U.S. Application 10/109,810 filed 3/28/2002; U.S. Provisional Appl. 60/390,856 filed 6/21/2002; and PCT application PCT/US02110298 filed 4/22002.

In general, during assembly, Fig. 1, the cartridge 10 is positioned such that end cap 23 is sealed to a protrusion or post 26 on the filter head 2. For the assembly 1 depicted in Fig. 1, the sealing is provided by o-ring 20 at region 28. The sealing ensures that unfiltered liquid cannot enter volume 13, at the junction indicated at 28.

One potential issue with respect to the servicing operation, is whether or not a cartridge 10 has been placed in the housing 7 before it is remounted on the filter head 2. That is, if the service provider closes the housing, cover or bowl 7 without a cartridge 10 in proper place, the resulting combination may "appear" to have been serviced, but in fact liquid flowing through the assembly 1 would not have been properly filtered. This can result in damage to the equipment involved.

For many cartridge-style assemblies, if the cartridge 10 is positioned within the housing, cover or bowl 7, but inappropriately, it is difficult to properly close the housing, cover or bowl 7 on the filter head 2. However, in some it might be possible to even have a housing, cover or bowl 7 with a cartridge 10 positioned therein closed and mounted on the filter head 2, without the cartridge 10 being properly positioned for appropriate operation.

In general, the present disclosure relates to a provision of a communication/sensor arrangement in association with a cartridge-style filter assembly. The communication/sensor arrangement is generally configured to provide information relating to conditions within the housing 7 to a position remote from the housing 7. A characteristic of the preferred communication/sensor arrangements characterized herein, is that a component of the communication/sensor arrangement is provided on the removable and replaceable (i.e., serviceable filter) cartridge 10, so that it will be removed with the remainder of the cartridge 10 during the servicing operation. A variety of communication/sensor arrangements configured for different advantages or for different sensing operations, are described herein. In general, each concerns provision of a communication/signal circuit with a communication/signal circuit completion unit positioned on the removable and replaceable (i.e., serviceable) cartridge 10. This means that the communication/signal circuit will not be complete, unless the cartridge 10 is properly installed for use.

For example, the present disclosure in part relates to optional provision of a communication/sensor arrangement that provides an indication to the service provider or equipment user, regarding whether a filter cartridge 10 is properly positioned within the bowl 7, for use. Such a communication/sensor arrangement will reduce the likelihood that the equipment would be inadvertently operated for any significant period of time, without a filter cartridge 10 properly positioned in the housing, cover or bowl 7 on the filter head 2.

In some systems, it may be desirable to monitor the condition of the liquid filtered by the cartridge 10. This can be done, for example, with appropriate analytical equipment. One option provided by the present disclosure concerns configuration of the communication/sensor arrangement, with a communication/signal circuit completion unit thereof on the filter cartridge 10, to provide an indication of the state of the liquid or particulate materials within the liquid, after it has passed through the filter media 12. Such a communication/sensor arrangement can be used to reduce the likelihood that the equipment will be inadvertently operated for any significant period of time, with an unacceptable condition of the liquid.

An option provided by the present disclosure relates to provision of a communication/sensor arrangement which can provide for both: (a) an indication function regarding whether the cartridge 10 is properly positioned within the housing cover or bowl 7 for use; and, (b) the state of the filtered liquid or particulate material in the filtered liquid.

### II. General Characteristics of the Communication/Sensor Arrangement.

In general, the communication/sensor arrangement includes two primary components: (a) a communication/signal unit including a transmitter segment and receiver segment positioned within the filter head 2 (i.e., on the outlet 1b); and (b) a communication/signal circuit completion unit operably positioned on the removable and replaceable cartridge 10, i.e., the serviceable filter cartridge 10. By "operably positioned" in this context, it is meant that the communication/signal circuit completion unit is positioned on the serviceable filter cartridge 10 such that: when the filter cartridge 10 is properly or operably positioned (in the assembly 1 for filtering) a communication circuit between the transmitter segment and the receiver segment is completed; and also, such that if the cartridge 10 is not properly positioned (or not operably positioned) in the assembly 1 for filtering, the signal circuit between the transmitter segment and the receiver segment is broken.

As an example, appropriate indicators can be installed in the filter head 2 and/or elsewhere in the machinery involved, to indicate whether the signal circuit of the communication/signal unit is (or is not) completed by the communication/signal circuit completion unit, to thus indicate, whether operation of the equipment or machinery is appropriate. Indeed, a control circuitry can be provided such that if the circuitry of the communication/signal unit is not complete, or an appropriate condition is not sensed, the equipment cannot be operated.

For a typical, preferred cartridge-style assembly 1, the communication/signal unit will be positioned: with at least portions of a transmitter segment and a receiver segment in the filter head 2, so as not to be changed out during a normal servicing operation; and, such that the communication/signal circuit completion unit will be positioned on the replaceable cartridge 10, and will be removed with the cartridge 10, with a new communication/signal circuit completion unit being provided on the new replacement cartridge service component 10. Of course alternatives (for example in which the communication/signal circuit completion unit is removeably positioned on the cartridge 10, so that it can be removeably positioned on the service cartridge 10 during replacement operation) are possible.

### A. Examples of assemblies in which the communication/sensor arrangement is used to indicate whether the cartridge 10 is in proper position for operation.

For a particular preferred arrangement, the signal is a light (i.e., an electromagnetic or EM) signal and the circuit of the communication/signal unit is a light or optic circuit. This will be convenient for use with arrangements such as lubrication filters, hydraulic filters or fuel filters, in which the liquid component involved is flammable. Herein the term "light" in this context, is meant to refer to one or more selected wave lengths of the electromagnetic spectrum. In general it is anticipated that light signals utilized according to the present disclosure, will include a range of wave lengths of visible light. However, in some application alternatives, such as selected UV wave lengths or selected IR wave lengths, may be useable.

In general, the assemblies and arrangements are such that a complete signal circuit (in the communication/signal unit) requires a component within the cartridge 10 to be appropriately positioned with respect to a portion of the signal circuit included in the filter head. In one type of application, for example: (a) the transmission segment includes a source of light, for example an optic fiber transmitting light from a light source such as an LED (light emitting diode); (b) the receiver segment includes a receiver for light, for example an optic fiber configured for communication with a photosensor; and, (c) the communication/signal circuit completion unit is a reflector or light conduit, that completes the light circuit. The particular embodiment shown in Figs. 1-7, utilizes such an arrangement.

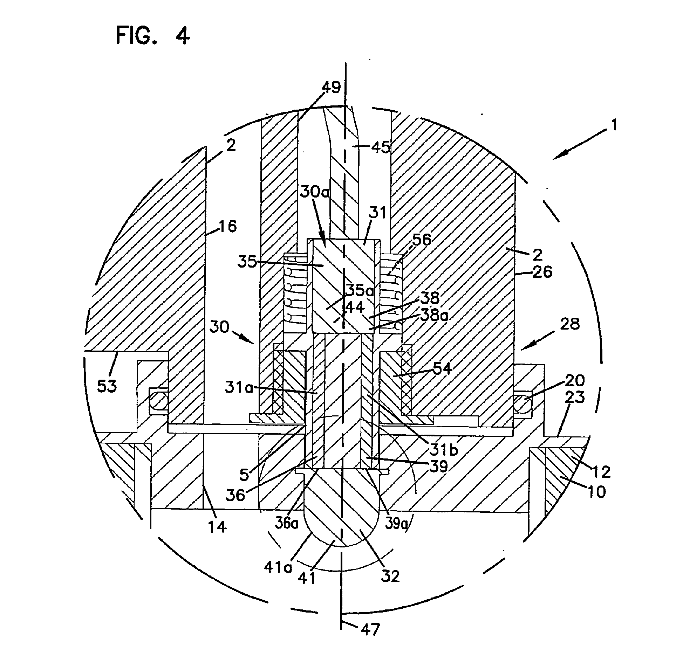

Attention is now directed to Fig. 4, which is an enlarged, fragmentary view of a portion of Fig. 1. In Fig. 4, the assembly 1 is depicted properly mounted on the filter head 2, for filtering operation. The serviceable filter cartridge 10, then, is shown operably mounted on and sealed to protrusion 26 of filter head 2, with sealing at region 28 provided by o-ring 20.

In the embodiment of Fig. 4, a communication/sensor arrangement 30 is depicted comprising a communication/signal unit 30a including: a signal transmitter/receiver unit 31; and, signal circuit completion unit 32. The signal transmitter/receiver unit 31 is shown mounted in the filter head 2; and, the communication/signal circuit completion unit 32 is shown mounted on the cartridge 10 and positioned to complete a signal circuit between a signal transmission segment 31a and a signal receiver segment 31b of the signal transmitter/receiver unit 31.

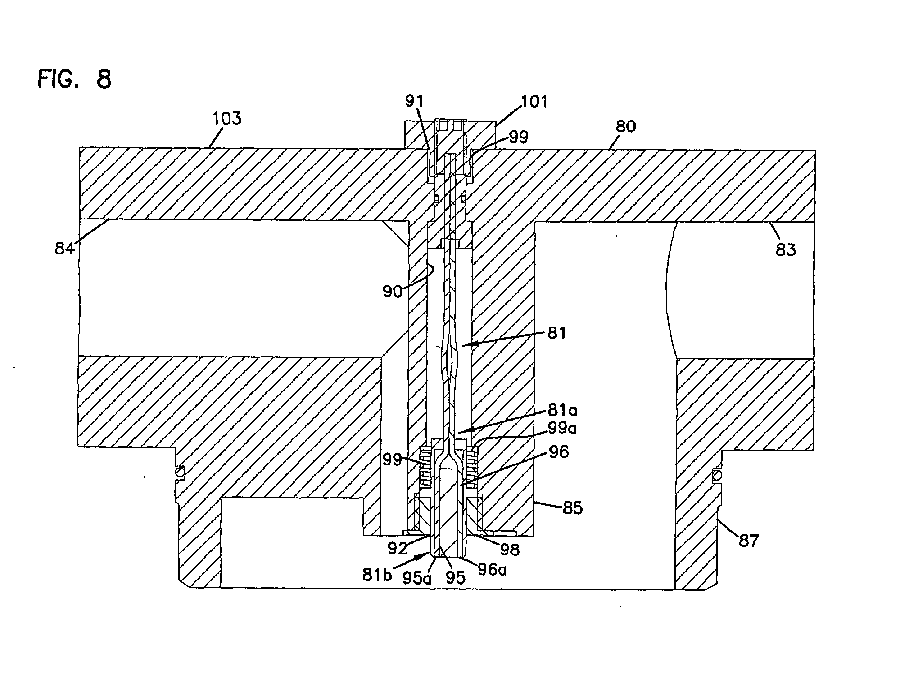

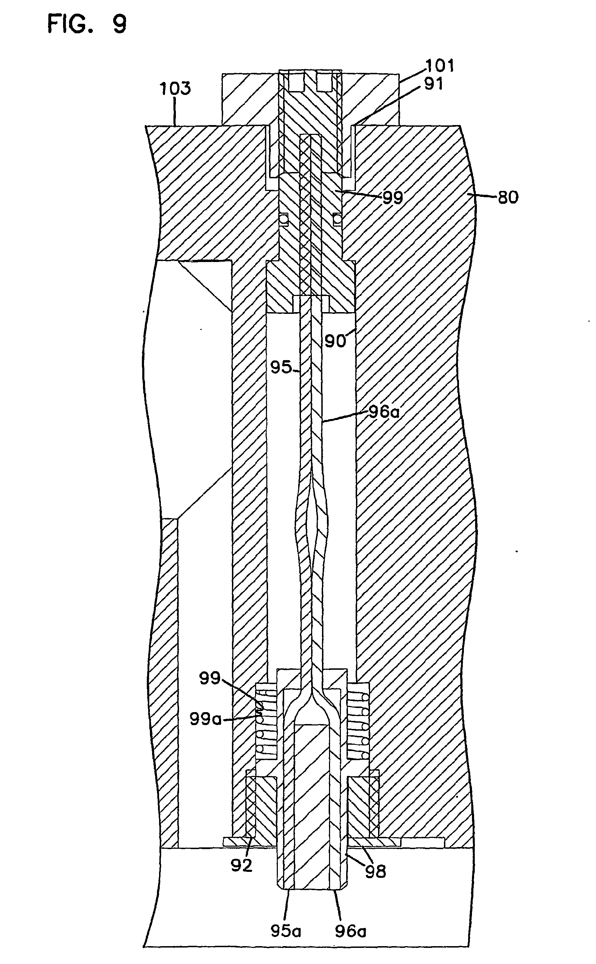

For the particular embodiment shown, the signal transmitter unit 31 a includes: an optic fiber 36, for transmitting at least a portion of the light generated by an optic signal generator 35 to the cartridge 10. For the embodiment shown, the optic signal generator 35 (for example a light emitting diode (LED) 35a) is also included in the signal transmitter unit 31a (in the filter head 2); however, it is noted that in some embodiments the portion of the transmission unit 31a contained within the filter head 2 may be the optic fiber 36, with the optic signal generator 35 remotely located. An example of such an embodiment is described below in connection with Figs. 8 and 9.

Still referring to Fig. 4, the signal receiver unit 31b, generally includes: an optic fiber 39 appropriately positioned to receive a light signal from the cartridge 10 and to transmit the signal to a light receiver 38 (such as a photosensor 38a). It is noted that in some embodiments, the portion of the signal receiver unit 31b contained within the filter head 2, may be only the optic fiber 39, with the light receiver 38 located remotely. One example is shown in the embodiment of Figs. 8 and 9 below, in which the photosensor is located outside of the filter head 2, for convenience.

For the particular embodiment shown in Figs. 1-7, the communication/signal circuit completion unit 32 generally comprises a reflector 41. The reflector 41 is configured and positioned: (1) so that when the reflector 41 is in a proper installation position, signal (light) transmitted from fiber optic 36 (or signal transmission unit 31a) upon appropriate passage through the reflector 41, will be directed (for example reflected) into optic fiber 39 (or signal receiver unit 31b), for transmission to light receiver 38; and (2) so that when reflector 41 is not in a proper installation position, signal (light) from fiber optic 36 (or signal transmission unit 31a) does not get reflected into or received by fiber optic 39 (i.e., by signal receiver unit 31b).

The terms "proper installation position" or "operable position" or variants thereof used in this context, are meant to refer to a proper installation position for operation of the filter cartridge 10, (with componentry thereon such as the reflector 41), for filtering operation during installation and use of cartridge-style assembly 1. Thus, the proper installation position for the reflector 41 only occurs when the cartridge 10 is in housing, cover or bowl 7 and is appropriately positioned for filtering. If the cartridge 10 is left out of the housing, cover or bowl 7, for example, the reflector 41 (i.e., the communication/signal circuit completion unit 32) will not be in an appropriate position for completion of a signal (light) circuit from the signal generator 35 to the signal receiver 38, i.e., from optic fiber 36 to optic fiber 39.

The assembly 1 could be configured such that the same would be true in a system in which the filter cartridge 10 is present, but it is not appropriately positioned for proper filtering operation of the filter assembly 1.

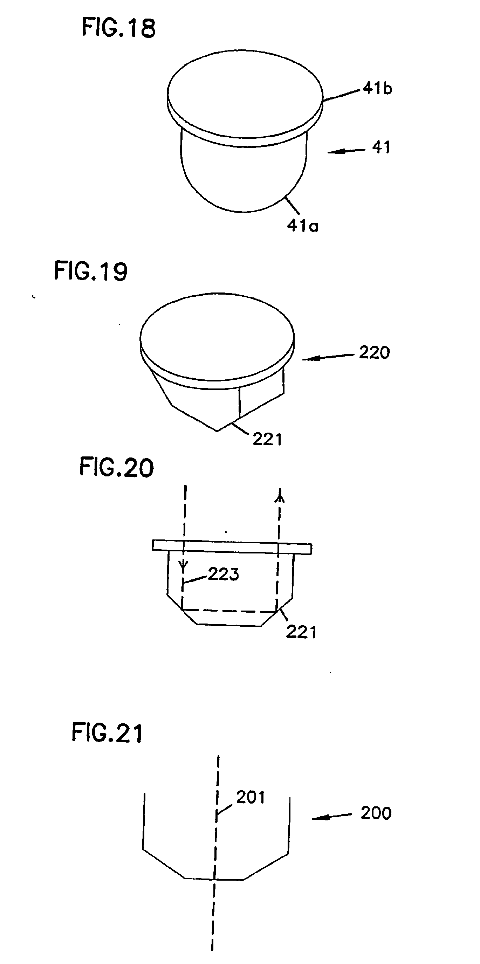

Still referring to Fig. 4, it is noted that outer surface portion 41 a, of reflector 41, in the region where light reflection will primarily occur has a generally spherical configuration. This configuration provides for a reflecting surface in region 41 a, that is radially symmetric; i.e., no matter what the radial position of the cartridge 10 is, when mounted on the filter head 2, the same shape of reflector surface will be presented, for light flow or reflection. Attention is directed to Fig. 18 where reflector 41 is shown in perspective view, separated from the cartridge 10. Alternate configurations are possible, see Figs. 19-21 discussed below.

Referring to Fig. 4, the communication/sensor arrangement 30 depicted includes an appropriate light/electrical current interface 44 and electrical communication line or wiring 45 for control and operation of the signal transmitter 31a, and for processing and communicating information received from the receiver unit 31b to a location for evaluation by the service provider or the equipment operator. For example, the wiring 45 can provide for an electrical signal generated by the interface 44 for operation of a dash board indicator or similar indicator, that will indicate that the cartridge 10 is in proper position. Of course the indication can be provided by a circuit arrangement or control mechanism that provides a light or other indicator signal, when no circuit is detected in the communication/sensor arrangement 30, in order to alert the equipment user or the service provider that the cartridge 10 is not in a proper operational position. The communication line 45 also provides for electrical communication for operation of the signal transmitter 31(a).

In some instances the equipment can be provided with an override such that if it is detected that the communication/signal circuit completion unit 32 is not in a proper installation position, the equipment involved cannot be operated to cause liquid flow through housing, cover or bowl 7, Fig. 1.

In general, the interface 44 can be any of a variety of interfaces for conversion of an electrical signal to a light signal, and a light signal to an electrical signal. Standard, known, componentry for such conversions, can be used.

In some instances, equipment involved can be provided with a computer or processor that controls operation of the sensor arrangement 30, or controls operation of the equipment based upon information received from the communication/sensor arrangement 30 about the status of cartridge 10. Of course the operation circuitry can be configured to provide for operation of the communication/sensor arrangement 30: (a) only once, when the equipment is first started up; (b) intermittently during the equipment operation; or, (c) constantly. It is anticipated that in a typical arrangement, the communication/sensor arrangement 30 would only be operated when, or shortly after, the equipment is initially turned on, and for only a brief period of time.

Referring to Fig. 1, filter head 2 is depicted with a central communication conduit 49 extending therethrough, to a position adjacent an appropriate location of reflector 41 on cartridge 10, when the assembly 1 is mounted on the filter head 2.

End 50 of conduit 49 is an outside end, and positioned thereat is a coupling 51 at which communication line 45 terminates. The arrangement can be provided with an appropriate electrical connector 51 a for attachment of line 45. Also, the coupling 51 may include appropriate connectors for signal communication through electrical lines to remote locations for the equipment involved. For example, the communication can be to a light on a dashboard or control panel, which indicates the absence of proper installation condition for the filter cartridge 10, when the assembly 1 is not mounted with cartridge 10 in place, but when the vehicle or the equipment is turned on.

Still referring to Fig. 1, conduit 49 terminates at a second end 53. Positioned adjacent second end 53 are tips 36a and 39a of optic fibers 36 and 39, respectively. The optic fibers 36, 39 are centered in position by nut 54, Fig. 4. The preferred communication/signal arrangement 30 includes a preferred mounting for the optic fibers 36, 39 such that they "float" axially, i.e., can axially move when encountered by a filter cartridge 10. The axial floating is provided by spring 56, Fig. 4, which supports the optic fibers 36 and 39 (and the optic signal generator 35). As a result, as the cartridge 10 is mounted on to post 26, the cartridge 10 will be moved against the tips 36a, 39a of the optic fibers 36, 39 and the fibers 36, 39 can move slightly axially, to accommodate this motion in the cartridge 10. Such a spring loaded mounting arrangement allows for ensurance that the optic fibers 36, 39 will make appropriate contact with the filter cartridge 10. Herein the terms "axial" and "axially" are intended to indicate a direction of movement parallel to movement of the cartridge 10 toward and away from post 26, during mounting and dismounting. Alternately stated, it would be movement in the longitudinal direction of central axis 47, Fig. 4.

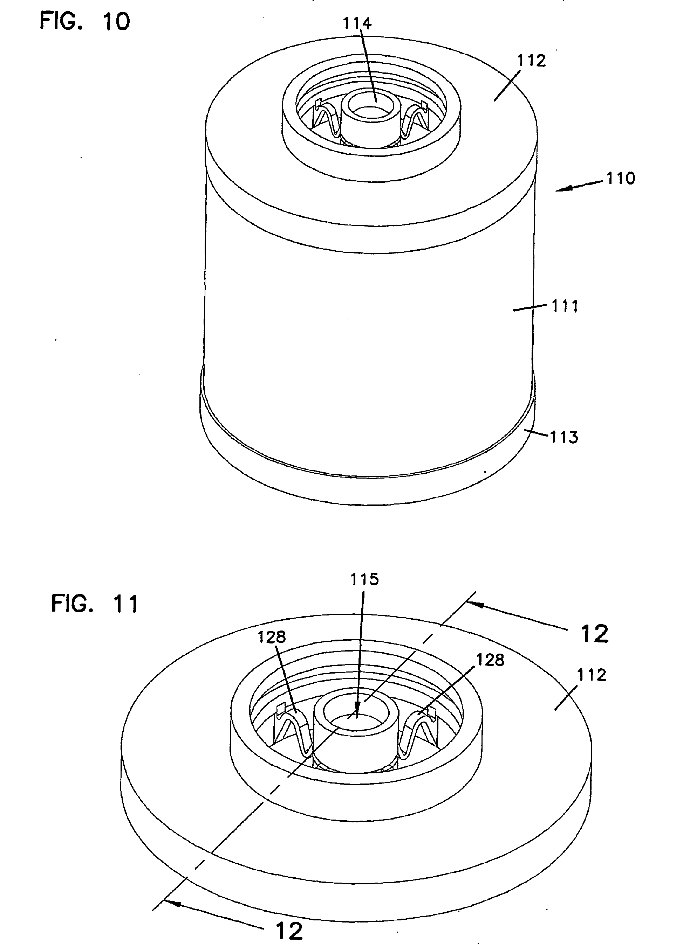

As an alternative to the spring loaded mount arrangement discussed above, to allow axial float between the reflector 41 and the optic fibers 36, 39 during engagement, the reflector 41 can be mounted on an end cap which includes a flex arrangement to allow for axial give. Ribs that provide for such a flex arrangement are described below in connection with the embodiment of Figs. 10-17. Such a flexible end cap could be used in the embodiment of Figs. 1-7, with reflector 41 mounted therein. Again, the result would be that axial float would be provided, with the reflector 41 being allowed to float, and the optic fibers 36, 39 being mounted more axially rigidly.

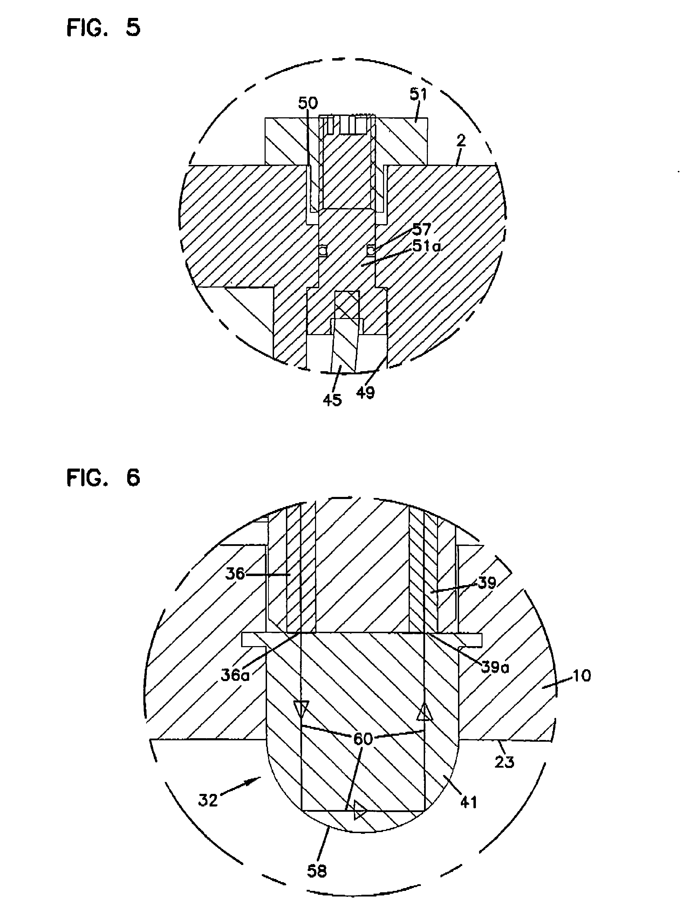

In Fig. 5, an enlarged, fragmentary view is shown of a portion of the arrangement depicted in Fig. 1, adjacent end 50 of conduit 49. Coupling 51 is viewable, along with electric communication line 45. Nut/connector 51a, is shown securing wire 45 in place, and providing communication to connector 51. O-ring 57 is positioned, to ensure seal.

Referring to Fig. 6, reflector 41 (i.e... the communication/signal circuit completion unit 32) is shown comprising a glass or plastic reflector plug 58 positioned centrally in end cap 23 of cartridge 10. The reflector plug 58, of reflector 41, is shaped appropriately so that at least some light passing therethrough will be reflected at any boundaries the light approaches at an angle. Thus, referring to Fig. 6, as light passes into the plug 58 from transmission optic fiber 36, it will at least in part be directed into receiver optic fiber 39, via deflection along the path indicated by arrows 60. Again, the plug 58 can be constructed of a variety of materials, for example reflectors of glass, plastic (or coated glass or coated plastic).

The plug 58 can be permanently positioned in end cap 23 of cartridge 10. In the alternative, it can be positioned removeably mounted, so that it can be separated and be re-used. It is anticipated that typically it will be permanently positioned in cartridge 10.

For the particular arrangement depicted in Figs. 1-7 as described, typical operation would involve an electrical signal passing through communication line 45, and central communication conduit 49, in order to reach interface 44 of signal transmitter/receiver 31. This means that there will be an electrical signal passing through filter head 2.

For some applications, may be desirable to avoid having an electrical signal passing through filter head 2, in regions where contact with flammable liquids such as lubricating fluids, fuel or hydraulic fluids are located. A second embodiment shown in Figs. 8 and 9 is presented, which accommodates this.

Attention is first directed to Fig. 8. In Fig. 8, an alternate filter head 80, with an alternate component of a communication/sensor arrangement 81 is shown. The filter head 80 of Fig. 8, can be utilized in association with filter cartridge 10 and housing, cover or bowl 7, Fig. 2. The component of a communication/sensor arrangement 81 depicted in filter head 80, is a portion of a communication/signal unit 81a including signal transmitter/receiver unit 81b.

Referring to Fig. 8, filter head 80 includes liquid flow inlet conduit 83, exit flow exit conduit 84, central post 85, for mounting cartridge 10; and, threaded ring 87, for mounting housing, cover or bowl 7. Filter head 80 further includes central communication conduit 90 having first end 91 and second, internal, end 92.

The arrangement of Figs. 8 and 9, unlike the arrangement of Figs. 1-7, includes no electric line (analogous to line 45, Fig. 4) passing through conduit 90. Rather, communication to and from the reflector 41 in cartridge 10, when used with filter head 80, is provided by a transmitter segment 95 comprising transmission optic fiber 95a and a receiver segment 96 comprising receiver optic fiber 96a, which extend through central communication conduit 90 generally from a region adjacent end 91 to internal end 92. At end 92 the optic fibers 95a, 96a, are appropriately secured in position by head piece, nut or plug 98. Adjacent the other end 91, the optic fibers 95, 96 are secured in position by end piece, nut or plug 99. The optic fibers 95, 96 are shown terminating at an optic connector 101 secured adjacent outer surface 103 of filter head 80. This portion of the filter head 80 is shown in fragmentary, enlarged, view, in Fig. 9.

As a result of the arrangement shown in Figs. 8 and 9, avoidance of any electrical signal passage into interior portions of filter head 80 is accomplished. Indeed, connector 101 can be configured such that it would be attached to still further optic fibers, to provide light communication from a remote light source and to a light receiver unit positioned remotely. As a result, the risk of electrical charge or spark igniting flammable liquid within filter assembly 1 and filter head 80, during use, is reduced.

It is noted that the embodiment of Figs. 8 and 9 includes a spring loaded mount, provided in part by a spring 99 in region 99a, is used to provide the optic fibers 95a, 96a with a preferred axial float to ensure engagement. This is analogous to the axial float for the embodiment of Figs. 8 and 9. Of course, the axial float could be provided by mounting the reflector on the cartridge by a flexible end cap, for example using flexing ribs as described below in connection with the embodiment of Figs. 10-17.

In other ways the assembly of Figs. 8 and 9 would be made and used generally in accord with the assembly of Figs. 1-7.

In Fig. 18 a perspective view of reflector 41 as shown, having a spherical reflecting surface 41a and radial mounting flange 41b. Such a plug provides for radial symmetry. Thus, no matter how plug 41 is radially located relative to the filter head, the intended reflection path will be achieved. A similar affect would be achieved using a reflector 200 having a cross-sectional configuration shown schematically Fig. 20, with radial symmetry around central axis 201.

In the above descriptions, a method of use is suggested. In general the method would be a method of evaluating the condition of a serviceable filter cartridge mounted on a filter head. The method would include a step of passing a signal, for example light or optic signal, from the filter head, through a communication/signal circuit completion unit on the filter cartridge, and back into the filter head. The method could then include various approaches to analyzing the signal, and providing information about the complete circuit.

Methods of assembly are also suggested from the above. The methods generally include a step of providing, in the open or outlet end cap of a filter cartridge, a communication/signal circuit completion unit, for example as a reflector plug. Methods could further include completion of the cartridge assembly, and installation of the cartridge on to a filter head, for use.

### B. A communication/sensor arrangement figured to provide information about the status of liquid, or particles in the liquid, after filtering.

Information about particulate material in a liquid, can be collected and evaluated utilizing analytical equipment in which a light (electromagnetic or EM) beam is passed through the liquid and is evaluated. Information that can be collected utilizing such a technique would include information concerning: the amount of, or concentration of, particulates within the liquid; the nature and size of the particulates; and, information concerning the quality or clarity of the liquid. In general, such analytical techniques involve providing a liquid stream or pool positioned between a light (EM) transmitter and light (EM) receiver. In one method, a portion of the light passing through the liquid stream is inhibited by particles in the liquid stream. In this instance, the receiver would see a measurable energy drop as a result of the particulate presence, that would be proportional to, or could be correlated to, the size of (and amount of) the particles. In a second method, light scattering due to the presence of the particles is evaluated. In this approach an increase in energy or amount of light scattering, is proportional to, or can be correlated to, the size of (and amount of) the particles.

A problem with trying to use an optic system to size and count particles in a moving liquid stream (such as lubricating oil, hydraulic fluid or fuel stream in vehicles and other equipment) is that the accuracy of measurement will become reduced in time, due to worn or dirty optics at the interface with the liquid stream. Using techniques generally characterized above, and specifically applied as described in this section, certain optic components of a communication/sensor arrangement can be positioned in the replacement cartridge, so that each time the filter assembly 1 is serviced, and the filter cartridge is replaced, certain interface optic components of the communication/sensor arrangement are replaced and thus are serviced.

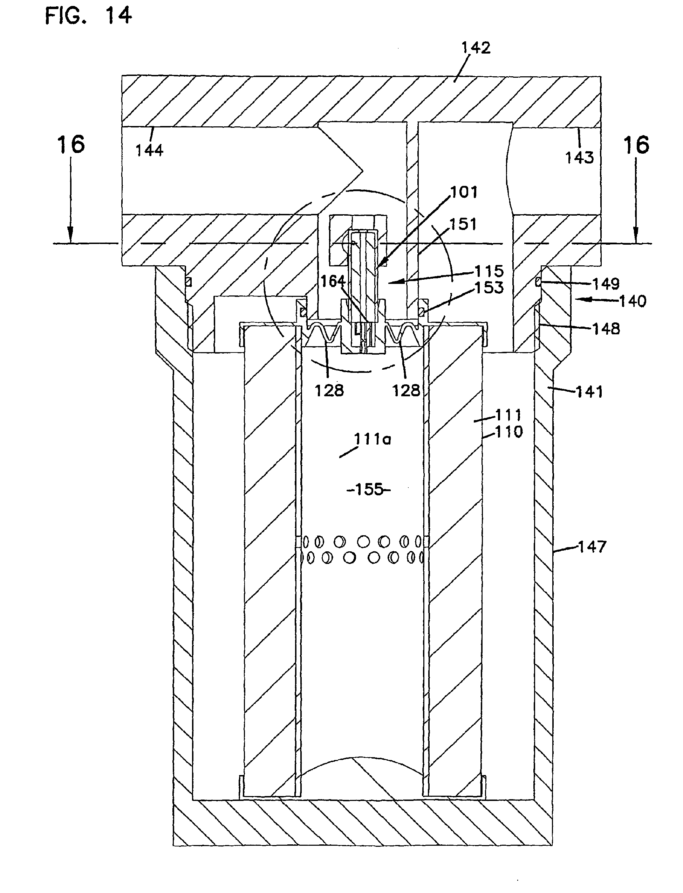

A filter cartridge arrangement 110 (and portions thereof) that can be used in this manner, is shown in Figs. 10-17. In Fig. 10, a schematic perspective of the filter cartridge 110 is shown. The filter cartridge 110 generally includes a media pack 111, in this instance configured to define an open interior 111 a (not shown in Fig. 10, see Fig. 14). Media pack 111 is positioned in extension between first and second end caps 112 and 113. In general the first end cap 112 is an open end cap which, during use, is sealed to a filter head and which permits passage of filtered liquid therethrough, after filtering, through exit aperture 114. The second end cap 113 is oppositely located, and is generally closed to passage of liquid therethrough.

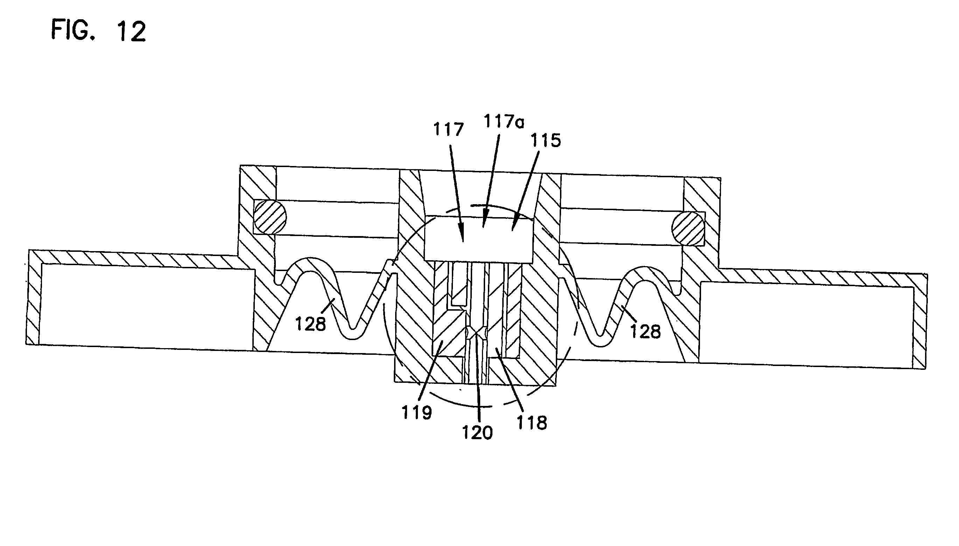

In Fig. 11, first end cap 112 is depicted in perspective. In general the first or open end cap 112 houses selected componentry of a communication/sensor arrangement 115. In particular, it includes selected optical componentry positioned to operate as a communication/signal circuit completion unit 117 (Fig. 12) of a communication/signal unit 117a. For the embodiment of Figs. 10-17, and referring to Fig. 12, included within the end cap 112, is a portion of optic signal transmitter segment 118 and a portion of optic signal receiver segment 119, which are replaced each time the cartridge 10 is replaced. For the particular arrangement shown, the transmitter segment 118 and receiver segment 119 are positioned to transmit (and receive) a light signal directed into, through or across a gap 120 positioned therebetween. The purpose of this, as described below, is to allow optical analysis of liquid operably positioned within the gap 120, during analysis. Thus, the communication/sensor circuit completion unit 117 positioned within the filter cartridge 110, is not merely a reflector, but rather it is an optic conduit for transmitting a portion of a light signal through or across the gap 120.

In general, the communication/sensor arrangement 115 would include appropriate optical componentry for measuring an intensity of light transmitted across gap 120 (or scatter in the gap), between the transmitter segment 118 and the receiver segment 119. This information can then be converted into information about particulate material contained within liquid that is positioned in the gap 120 during the transmission. Typical measurements would be conducted with use of a photosensor (not shown), that can be located in the filter head or remotely. The photosensor may be selected for operation at a particular wave length or range of wave lengths, to detect and evaluate particular characteristics about liquid passing through the gap 120.

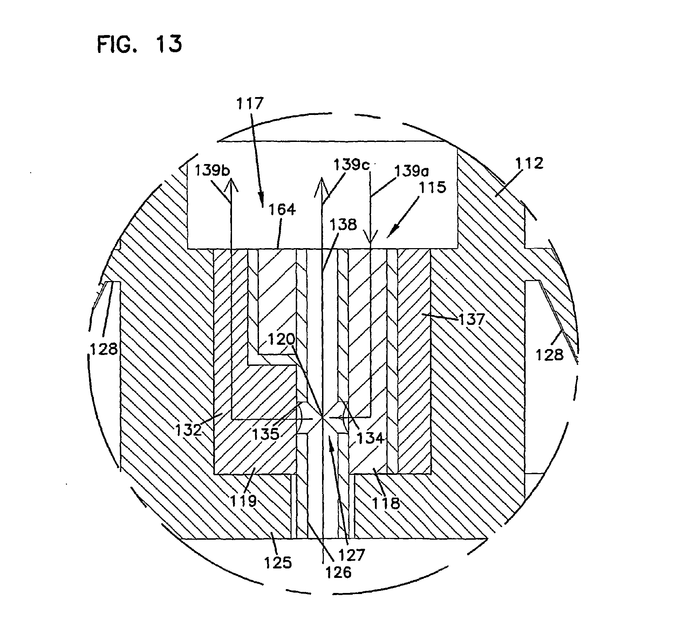

In Fig. 12, the end cap 112 is shown in cross-sectional view. In Fig. 13, an enlarged, fragmentary portion of a portion of the end cap 112 shown in Fig. 12 is depicted. The particular portion shown in Fig. 13, is the portion which includes the communication/signal circuit completion unit 117.

Referring to Fig. 13, the first end cap 112 includes a center block 125 having liquid flow passage 126 extending axially therethrough. A central portion 127 of liquid flow path 126, includes gap 120 therein and is the defined portion for light passage and analytical measurement.

Positioned at region 127, filter cartridge 110 includes the light signal transmitter segment 118 and the light signal receiver segment 119. For the arrangement shown, each is a portion of an optic fiber. The receiver segment 119, then, comprises an outer layer component of an optic sensor 132. The receiver segment 119 would typically include an opaque material that prevents light from passing between the transmitter segment 118 and the receiver segment 119 at any location other than at the specific defined location of gap 120. At location 127 are provided two holes 134, 135 that allow light to move across gap 120 between the transmitter segment 118 and the receiver segment 119, with passage through liquid in flow path 126. The center lines of the holes 134, 135 for an embodiment that directly measures light transmission (rather than scatter) would typically be coincident with each other.

In general, the sensor 132 (comprising transmitter segment 118 and receiver segment 119) is housed in a sleeve 137 that is an integral part of end cap 112. In use, light enters along the path indicated by arrow 139a, leaves as shown at 139b and liquid passes along the path indicated by arrow 139c. The sleeve 137 is positioned at an axial center line 138 of the end cap 112, and is held in place by flexible ribs 128, Fig. 12. The ribs 128 allow flex (or axial float) in end cap 112 during engagement between the cartridge 10 and a filter head, during use.

(As indicated above, it is noted that the embodiments of Figs. 1-9 could be implemented using structure analogous to flexible ribs 128, to provide for axially floating construction for the optic fibers in the filter head, as opposed to (or in addition to) the use of the spring loaded mounts. Also, a spring loaded mount in filter head 142 could be used to provide the axial float.)

A completed assembly, utilizing end cap 110, is depicted in Figs. 14-17.

Referring to Fig. 14, an overall assembly 140 is depicted which includes a cartridge-style filter assembly 141 and a filter head 142. The filter head 142 may be generally analogous to filter head 2, except as described herein. Thus, filter head 142 would include fluid flow inlet 143 and fluid flow exit 144.

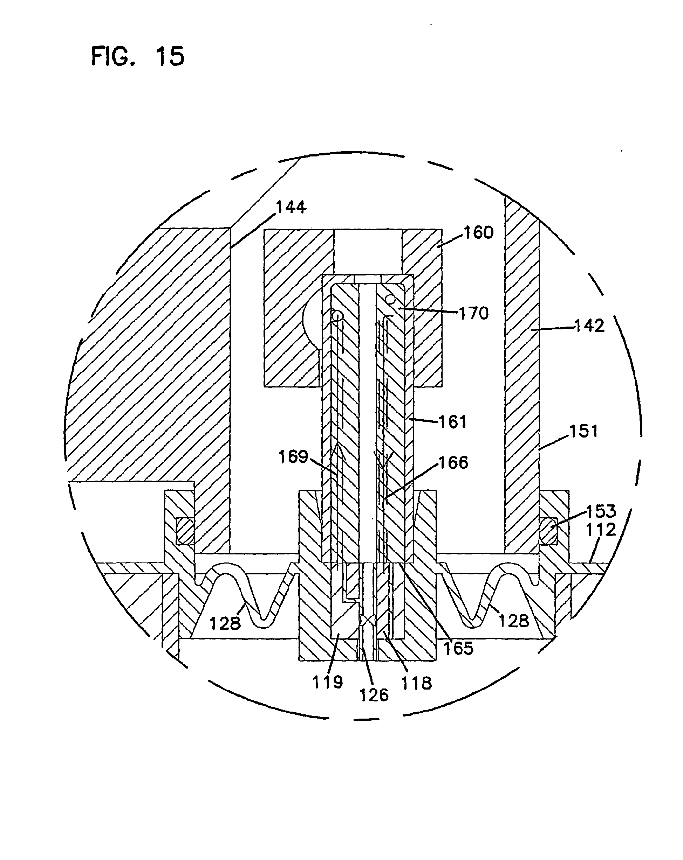

The cartridge-style filter assembly 141 would generally include cover, housing or bowl 147 threadably mounted on the filter head 142 at threads 148, with a seal provided by o-ring 149. The cartridge-style filter assembly 141 further includes filter element cartridge 110 operably positioned therein, sealed to post 151 of filter head 142 at o-ring 153, Fig. 15.

Referring to Fig. 14, during a normal filtering operation liquid passes through media pack 111 of filter cartridge 110 into central volume 155. The liquid then passes out of central volume 155 by passage through end cap 112, specifically through conduit or liquid path 126, Fig. 15.

Attention is now directed to Fig. 15 which is an enlarged view of a portion of Fig. 14. In Fig. 15, the relationship between the end cap 112 and filter head 142, during proper mounting, is shown. In this instance, the filter head 142 can be configured to include therein a mounting boss 160. The mounting boss 160 protrudes from a side of passage 144, to extend past a center line of the end cap 112. The mounting boss 160 houses a fiber optic module 161, that comprises a portion of a communication/signal unit and provides for passage of a light beam into and from the communication/signal circuit completion unit 117 in the end cap 112.

When the filter cartridge 110 is properly mounted in the cartridge-style filtration assembly 141, and onto the filter head 142, an axial outer surface 164 (Fig. 13) of the communication/signal circuit completion unit 117 operably aligns with or abuts against an axially outer surface 165 (Fig. 15) of the fiber optic module 161. By the term "operably aligns with" or "operably abuts" and variations thereof in this context, it is meant that the components 117, 161 are configured such that, during assembly, a light transmission portion 166 of the fiber optic module 161 aligns for light transmission into transmitter segment 118, and a light receiver portion 167 of the fiber optic module 161 aligns to receive light from light receiver segment 119 in end cap 112. This can be done as shown by using a co-axial fiber optic system in which an inner optic fiber 166 of the fiber optic module 161 aligns with the transmitter segment 118, and an outer optic fiber 167 aligns with the receiver segment 119. An opaque material can be used to prevent light from being transmitted between the two, where not intended.

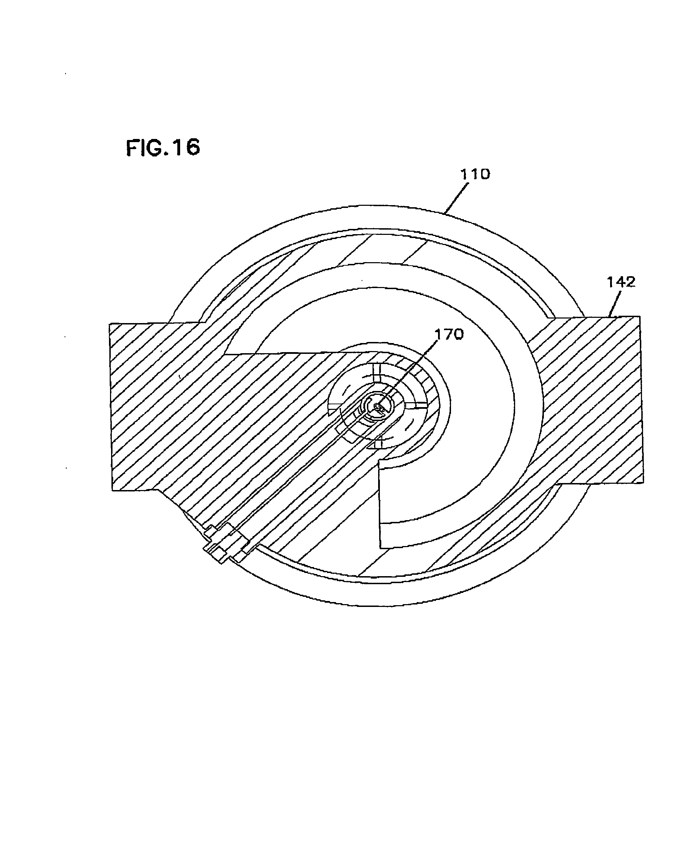

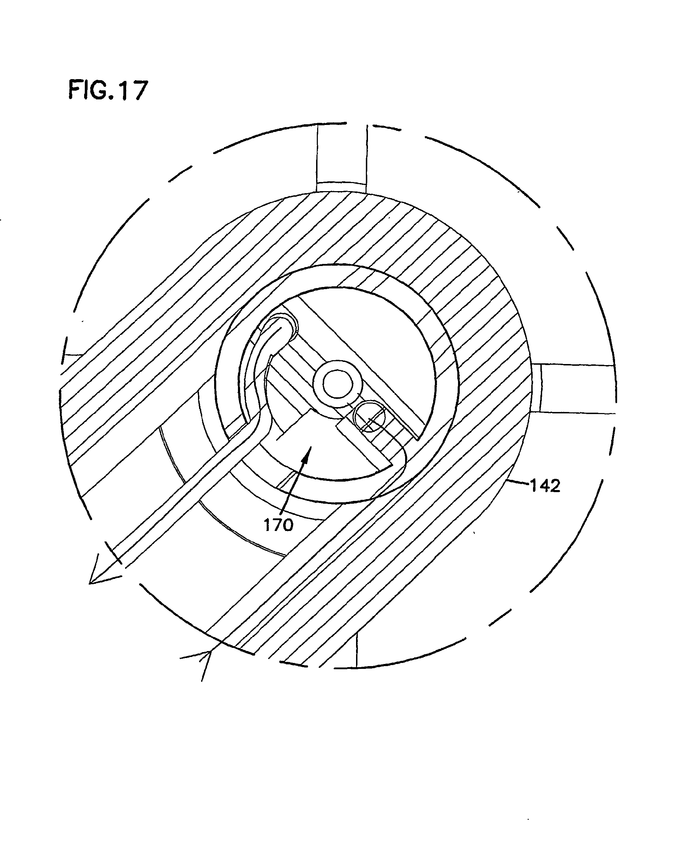

Still referring to Fig. 15, optic fibers 166, 167 of the optic module 161 continue in extension through passage 144 terminating at fiber optic connector 170. This connector 170 can be attached to various optic components, to allow the light to move to transmitter/receiver equipment mounted remote from the filter head 142. Access to connector 170 for such a connection is indicated in Figs. 16 and 17.

In order to ensure that the fiber optic module 161 makes proper operable contact with the communication/sensor circuit completion unit 117, the sleeve 137, Fig. 13, of the end cap 112 is designed such that it is biased toward the fiber optic module. This is done with the configuration of flexible ribs 128. As the cartridge-style filter assembly 141, Fig. 14, is mounted on the filter head 142, at threads 148, surface 164 of the cartridge 110, Fig. 13, is driven toward fiber optic module 161. Even after contact between the two is made, the flexible ribs 128 allow for continued movement of the filter cartridge 110 axially toward the fiber optic module 161. This allows ensurance of appropriate contact, under a variety of manufacturing tolerances.

From the above descriptions, methods of use are suggested. In particular the methods of use would involve passing a signal from a filter head, through a communication/signal circuit completion unit in a filter cartridge, and then back into the filter head; the signal comprising preferably an optic signal. The communication/signal circuit completion unit can be provided such that the optic signal is passed across or through a portion of filtered liquid passing outwardly from the filter cartridge, in order to facilitate analysis of a condition of the filtered liquid, for example the nature of particulates therein.

In addition, methods of assembly are provided. In general the methods of assembly include positioning a communication/signal circuit completion unit in a removable or replaceable (i.e., serviceable) cartridge. The method particularly involves providing such a communication/signal circuit completion unit which includes a liquid flow path extending across an optic path therein, for filtered liquid. This would facilitate analysis of particular material within the liquid.

Of course with liquid flowing through gap 120 (as it passes through path 126), optic signals passed across communication/sensor circuit completion unit 117, can be used to evaluate the nature of, or status of, particulate material within the liquid. In addition, if desired, the signal can be used to evaluate that the cartridge 110 is indeed in proper position, in a manner similar to use of the communication/sensor circuit completion unit 32 of the embodiments shown in Figs. 1-9.

### C. Other Variations.

It may be desirable in some embodiments to utilize the reflector plug that does not have radial symmetry. An example of this is shown in Figs. 19 and 20. Referring to Fig. 19, the reflector plug 220 depicted has a reflector surface 221 which is not spherical nor is it radially symmetric. Rather, it generally has a trapezoidal shape. It is interesting to note that the side elevational view, Fig. 20, shows a reflector surface 221 with the same general configuration as that shown in Fig. 21, except for the absence of radial symmetry.

If a cartridge was provided with a reflector plug 220 with surface 221, Figs. 19 and 20, it would be necessary that the cartridge be positioned in one of two selected radial orientations, to accomplish the appropriate light reflection path indicated by arrows 223, Fig. 20. One method to accomplish this, would be to utilize an assembly having an indexing between the cartridge and the filter head. Such an assembly is depicted, schematically, in Figs. 22-23.

Referring to Fig. 22, a schematic, side, cross-sectional view of filter assembly 240 is depicted, comprising filter head 242, housing or bowl 243 and cartridge 244. Except as described in this section, the components may be analogous to those described for the embodiments of Figs. 1-17.

In general, the reflector plug for the embodiment in Figs. 22-24, mounted in the cartridge 244 is a plug corresponding to plug 220, Figs. 19 and 20. As a result, radial indexing is required between filter head 242 and the cartridge 244, to ensure proper alignment between the optic fibers at 246 in the filter head 242, and the reflector plug 220 in the cartridge 244, during use.

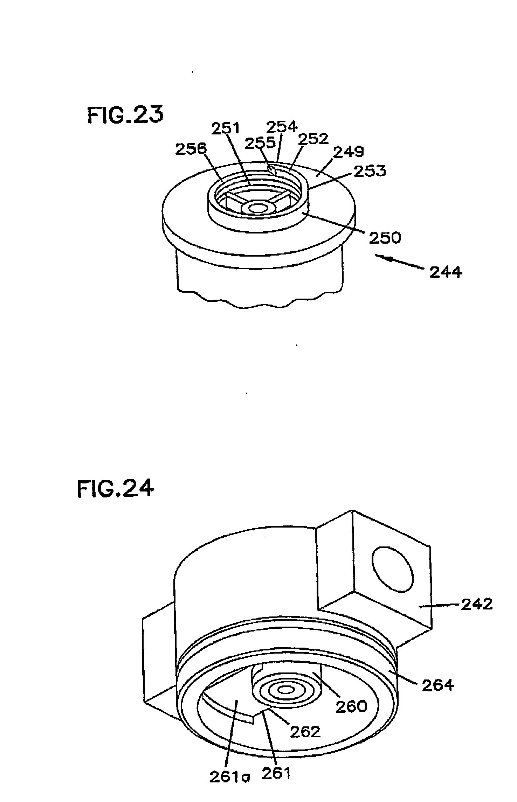

Referring to Fig. 23, the cartridge 244 includes an end cap 249 thereon, positioned for engagement for the filter head 242, during assembly. End cap 249 includes a collar 250 that not only houses an o-ring groove 251, for sealing connection with the filter head 242, but which also has an elevated section 252 that circumscribes a portion of the collar 250. The elevated section 252 has an outer surface defining an inclined plane 253. At the highest portion 254 the inclined surface 253 terminates at a vertical surface 255, that drops back to a lower point 256 on the cartridge end cap 249.

Referring to Fig. 24, the filter head 242 includes central mounting post 260, for engagement with the cartridge 244, during assembly. The filter head 242 further includes a radial extension 261, positioned as a rotation stop 262 to be engaged by vertical surface 255, during mounting. The filter 242 and the cartridge 244 would be configured such that when vertical surface 255 abuts stop 262, the reflector plug 220, Fig. 22, is appropriately aligned with optic fibers at 246, for proper use and operation.

Preferably the pitch or inclination of surface 253 is greater than the thread pitch of the bowl/head interface at region 264. Also preferably surface 261 a of stop 261 is inclined in the same direction as inclined surface 253, again preferably at an angle that is greater than the thread pitch of the bowl/head interface 264.

As a result of the arrangement shown, as the housing 243 is threadably rotated upon the filter head 242, the cartridge 244 will rotate until vertical surface 255 engages stop 261, leaving the cartridge 244 in an appropriate radial orientation relative to the filter head 242. Continued threading of the bowl 243 on the filter head 242 will complete assembly, as long as the cartridge 244 is configured so that the housing 243 can rotate relative to it, during assembly.

During the threading operation, should peak 254 engage surface 261a, a bind-up will not occur, as a result of the preferred inclined shape of each surface 261a, 253, characterized above.

It is noted that the direction of inclination for surface 261a and surface 253 is an issue of the direction of threading. The arrangement shown in Figs. 23 and 24 assumes a direction of threading of the bowl that would be clockwise, looking up from the bowl at the filter head.

Structure permitting relative rotation between the cartridge 244 and bowl 243, once the cartridge 244 is in the appropriate stopped position (defined above) can be provided in a variety of ways. For the particular embodiment shown in Fig. 22, the cartridge 244 has open end caps 249 and 265 at both ends. Sealing at end cap 265 is provided by radial seal 266, the seal member 267 of the radial seal 266 being an o-ring 268. The cartridge 244 can rotate around such a seal, relative to the housing 244. In the alternative, end cap 265 could be closed, with engagement between the end cap 265 and the housing 4, allowing relative rotation during mounting.

It is noted that an open end cap sealed by a radial seal, at an end opposite from the end cap which engages the filter head, can be utilized in association with any of the previous embodiments described, in connection with Figs. 1-17.

## Claims

1. A fluid filter cartridge (10; 110) comprising:
(a) first and second end caps (23, 24; 112, 113);
(b) a fluid filter media pack (12;111) secured to, and extending between, the first and second end caps (23, 24; 112, 113); and
(c) a communication/sensor circuit completion unit (32; 117; 41; 220; 200);
(i) the communication/sensor circuit completion unit being configured to complete a selected communication/signal circuit only when the filter cartridge is properly mounted for use;
(ii) the communication/sensor circuit completion unit being an optic circuit completion unit;
said cartridge being **characterized by**:
(d) the communication/sensor circuit completion unit being operably positioned on the first end cap; and
(e) an axial flex arrangement (128) being positioned on the first end cap and oriented aligned to support the communication/sensor circuit completion unit centrally in the first end cap;
(i) the axial flex arrangement being configured to allow for axial float of the communication/sensor circuit completion unit.

2. A fluid filter cartridge according to daim 1 wherein:
(a) the fluid filter media pack (12;111) is a liquid filter media pack.

3. A fluid filter cartridge according to any one of claims 1 and 2 wherein:
(a) the first end cap (23; 112) is an open end cap; and,
(b) the second end cap (24; 113) is a closed end cap.

4. A fluid filter cartridge according to any one of claims 1-3 wherein:
(a) the media defines an interior surrounded by the filter cartridge.

5. A fluid filter cartridge according to any one of claims 1-4 wherein:
(a) the axial float arrangement comprises flexible ribs (128).

6. A fluid filter cartridge according to any one of claims 1-5 wherein:
(a) the first end cap includes a collar 123 that houses an o-ring (20; 153) groove.

7. A fluid filter cartridge according to any one of claims 1-6 wherein:
(a) the first and second end caps are molded end caps.

8. A fluid filter cartridge according to any one of claims 1-7 wherein:
(a) the communication/sensor circuit completion unit is a reflector plug (220, 200) having a reflector surface that is not spherical.

9. A fluid filter cartridge according to any one of claims 1-8 wherein:
(a) the communication/sensor circuit completion unit is a reflector plug selected from glass and plastic.

10. A fluid filter cartridge according to any one of claims 8 and 9 wherein:
(a) the reflector plug (200) has a reflector surface that has radial symmetry.

11. A fluid filter assembly (1) **characterized by**:
(a) a filter head (2) having a fluid inlet (5) and a fluid outlet (16); and
(b) a fluid filter cartridge (10; 110; 244) according to one of claims 1-10 removably mounted on the filter head.

## Patentansprüche

1. Fluid-Filterpatrone (10; 110) mit:
(a) einer ersten Endkappe (23; 112) und einer zweiten Endkappe (24; 113);
(b) einer Fluid-Filtermedium Packung (12; 111), die sich zwischen der ersten Endkappe (23; 112) und der zweiten Endkappe (24; 113) erstreckt, und die an der ersten Endkappe (23; 112) und an der zweiten Endkappe (24; 113) befestigt ist; und
(c) einer Sensor-Schaltkreis-Schließeinheit (communication/sensor circuit completion unit) (32; 117; 41; 220; 200), wobei
(i) die Sensor-Schaltkreis-Schließeinheit (32; 117; 41; 220; 200) so konfiguriert ist, dass sie einen selektierten Signalschaltkreis nur dann schließt, wenn die Filterpatrone für den Betrieb korrekt eingesetzt ist;
(ii) die Sensor-Schaltkreis-Schließeinheit (32; 117; 41; 220; 200) eine optische Schaltkreis-Schließeinheit ist;
**dadurch gekennzeichnet, dass**
(d) die Sensor-Schaltkreis-Schließeinheit (32, 117; 41; 220; 200) operativ in der ersten Endkappe (23; 112) angeordnet ist; und
(e) eine axiale flexible Einrichtung (128) an der ersten Endkappe (23; 112) angeordnet ist und so orientiert bzw. ausgerichtet ist, dass sie die Sensor-Schaltkreis-Schließeinheit (32; 117; 41; 220; 200) in der ersten Endkappe (23; 112) zentriert, wobei
(i) die axiale flexible Einrichtung so konfiguriert ist, dass sie ein axiales Gleiten der Sensor-Schaltkreis-Schließeinheit (32; 117; 41; 220; 200) zulässt.

2. Fluid-Filterpatrone nach Anspruch 1 **dadurch gekennzeichnet, dass**:
(a) die Fluid-Filtermedium-Packung (12; 111) eine Flüssigkeits-Filtermedium Packung ist.

3. Fluid-Filterpatrone nach einem der Ansprüche 1 oder 2 **dadurch gekennzeichnet, dass**:
(a) die erste Endkappe (23, 112) eine offene Endkappe ist; und
(b) die zweite Endkappe (24; 113) eine geschlossene Endkappe ist.

4. Fluid-Filterpatrone nach einem der Ansprüche 1 bis 3 **dadurch gekennzeichnet, dass**:
(a) das Filtermedium einen von der Filterpatrone umgebenen Innenraum bildet.

5. Fluid-Filterpatrone nach einem der Ansprüche 1 bis 4 **dadurch gekennzeichnet, dass**:
(a) die axialen Gleiteinrichtungen flexible Rippen (128) enthalten.

6. Fluid-Filterpatrone nach einem der Ansprüche 1 bis 5 **dadurch gekennzeichnet, dass**:
(a) die erste Endkappe (23; 112) einen Kragen mit einer Nut zur Aufnahme eines O-Ringes (20; 153) besitzt

7. Fluid-Filterpatrone nach einem der Ansprüche 1 bis 6 **dadurch gekennzeichnet, dass**
(a) die erste Endkappe (23; 112) und die zweite Endkappe (24; 113) geformte Endkappen sind.

8. Fluid-Filterpatrone nach einem der Ansprüche 1 bis 7 **dadurch gekennzeichnet, dass**:
(a) die Sensor-Schaltkreis-Schliesseinheit ein Reflektorstopfen (220; 200) mit einer Reflektorfläche ist, die nicht spherisch ist.

9. Fluid-Filterpatrone nach einem der Ansprüche 1 bis 8 **dadurch gekennzeichnet, dass**
(a) die Sensor-Schaltkreis-Schließeinheit ein Reflektorstopfen ist, der aus Glas oder Kunststoff hergestellt ist.

10. Fluid-Filterpatrone nach einem der Ansprüche 8 oder 9 **dadurch gekennzeichnet, dass**:
(a) der Reflektorstopfen (200) eine Reflektorfläche mit radialer Symmetrie besitzt.

11. Fluid-Filteranordnung (1) **gekennzeichnet durch**:
(a) einen Filterkopf (2) mit einem Fluideintritt (5) und einem Fluidaustritt (16); und
eine Fluid-Filterpatrone (10; 110; 244) nach einem der Ansprüche 1 bis 10, die austauschbar in dem Filterkopf angeordnet ist.

## Revendications

1. Cartouche filtrante pour fluides (10 ; 110) comprenant :
(a) des premier et second bouchons (23, 24 ; 112, 113) ;
(b) un ensemble formant milieu filtrant pour fluides (12 ; 111) fixé à, et s'étendant entre, les premier et second bouchons (23, 24 ; 112, 113) ; et
(c) une unité établissant un circuit de communication/détecteur (32 ; 117 ; 41 ; 220 ; 200) ;
(i) l'unité établissant un circuit de communication/détecteur étant configurée pour établir un circuit de communication/signal choisi seulement quand la cartouche filtrante est montée de manière appropriée pour l'utilisation ;
(ii) l'unité établissant un circuit de communication/détecteur étant une unité établissant un circuit optique ;
ladite cartouche étant **caractérisée en ce que** :
(d) l'unité établissant un circuit de communication/détecteur est positionnée de manière fonctionnelle sur le premier bouchon ; et
(e) un dispositif de flexion axiale (128) est positionné sur le premier bouchon et orienté aligné pour soutenir l'unité établissant un circuit de communication/détecteur de manière centrale dans le premier bouchon ;
(i) le dispositif de flexion axiale étant configuré pour permettre un flottement axial de l'unité établissant un circuit de communication/détecteur.

2. Cartouche filtrante pour fluides selon la revendication 1 où :
(a) l'ensemble formant milieu filtrant pour fluides (12 ; 111) est un ensemble formant milieu filtrant pour liquides.

3. Cartouche filtrante pour fluides selon l'une quelconque des revendications 1 et 2 où :
(a) le premier bouchon (23 ; 112) est un bouchon ouvert ; et
(b) le second bouchon (24 ; 113) est un bouchon fermé.

4. Cartouche filtrante pour fluides selon l'une quelconque des revendications 1-3 où :
(a) le milieu définit un intérieur entouré par la cartouche filtrante.

5. Cartouche filtrante pour fluides selon l'une quelconque des revendications 1-4 où :
(a) le dispositif de flottement axial comprend des nervures flexibles (128).

6. Cartouche filtrante pour fluides selon l'une quelconque des revendications 1-5 où :
(a) le premier bouchon inclut une bague 123 qui contient une rainure pour joint torique (20 ; 153).

7. Cartouche filtrante pour fluides selon l'une quelconque des revendications 1-6 où :
(a) les premier et second bouchons sont des bouchons moulés.

8. Cartouche filtrante pour fluides selon l'une quelconque des revendications 1-7 où :
(a) l'unité établissant un circuit de communication/détecteur est un tampon réflecteur (220, 200) ayant une surface de réflecteur qui n'est pas sphérique.

9. Cartouche filtrante pour fluides selon l'une quelconque des revendications 1-8 où :
(a) l'unité établissant un circuit de communication/détecteur est un tampon réflecteur choisi parmi le verre et le plastique.

10. Cartouche filtrante pour fluides selon l'une quelconque des revendications 8 et 9 où :
(a) le tampon réflecteur (200) a une surface de réflecteur qui a une symétrie radiale.

11. Ensemble filtrant pour fluides (1) **caractérisé par** :
(a) une tête de filtre (2) ayant une entrée pour fluides (5) et une sortie pour fluides (16) ; et
(b) une cartouche filtrante pour fluides (10 ; 110 ; 244) selon l'une des revendications 1-10 montée de manière amovible sur la tête de filtre.
